# EUROPEAN PATENT APPLICATION

(11) **EP 4 596 117 A1**
(43) Date of publication of application: **06.08.2025**
(21) Application number: 22868438.7
(22) Date of filing: 27.09.2022
(51) Int. Cl.: B05D 7/14, B05D 5/00, B05D 1/04

(54) **METHOD FOR PRODUCING ENAMELS FOR VEHICLE BODYWORK AND COMPOSITION OF THE PAINT**

(71) Applicant: Industrias Proa, S.A., 36475 Porriño (ES)
(72) Inventor: MALLO FERRER, Manuel, 36475 PORRIÑO (ES)
(74) Representative: González López-Menchero, Álvaro Luis
(86) International application number: PCT/ES2022/070613
(87) International publication number: WO 2024/069022

(57) **Abstract**

The invention relates to a method that seeks to reduce the amount of emitted particles, wherein the particles are more easily retained, in addition to modifying the kinetics of the reaction so that the paint cannot polymerize at low temperatures and it can be easily cleaned if deposited. This method is carried out by means of electrostatic painting with a bell and is affected by the size of the paint drops and the amount of electric charge that can be produced on these drops, wherein the paint has a composition of melamine components together with the presence of a blocked acid catalyst.

## Description

### OBJECT OF THE INVENTION

The object of the present invention, as established by the title of the invention, is a method for producing enamels for vehicle bodywork that avoids the problem of paint particle deposition on car bodywork as a result of particles emitted in areas close to vehicle factories, particularly those areas where vehicles are painted.

Another object of the present invention is the composition of the paint used in the method for producing enamels for bodywork.

This deposition of emitted particles can polymerize, particularly in summer, when the bodywork of vehicles parked close to factories can reach very high temperatures. The present invention is characterized by the special design and configuration of the steps and composition of the paints emitted so that fewer particles are emitted, said particles polymerize less and they are easier to clean.

Therefore, the present invention falls within the field of vehicle painting.

### BACKGROUND OF THE INVENTION

In vehicle manufacturing factories, particularly those areas where vehicles are painted, a series of particles are emitted which, when deposited on a hot surface, melt on it and begin to polymerize, so that after a few hours at a high temperature, the deposited paint has polymerized and can only be removed by polishing or with strong solvents that alter the original paint.

This effect occurs particularly on the bodywork of vehicles parked in the sun close to a car manufacturing factory, particularly in areas where bodywork is painted.

Vehicles exposed to the sun can reach very high temperatures, particularly dark-colored vehicles, where the polymerization effect is observed on the glass, windshield rubber or black plastic parts of the vehicles.

Therefore, the object of the present invention is to develop a method and composition of paints that reduces the amount of emitted particles, wherein the particles are more easily retained, in addition to modifying the kinetics of the reaction so that the paint cannot polymerize at low temperatures and it can be easily cleaned if deposited.

### DESCRIPTION OF THE INVENTION

The object of the present invention is a method for applying enamels for vehicle bodywork, which seeks to act on several aspects:
- Improve the transmission of paint in the painting process, which reduces the amount of emitted particles.
- Have the particles be retained more easily on the water screens of the paint booths
- Modify the kinetics of the reaction so that the paint cannot polymerize at low temperatures and so that the start of polymerization is at higher temperatures, higher than 100°C, which are temperatures that are not reached under normal environmental conditions.
- Have the paint be easily cleaned with multiple solvents.

To achieve these objectives, the technical aspects that have been worked on are:
- Using low paint flow rates and low air pressure, to do this, it is necessary to achieve:
   A. A dry extract superior to the conventional paint of reference,
   B. Having the paint comply with all the required specifications at the thinnest thickness possible.
- Using some materials in the composition that are soluble in solvents, but also in water, whereby the paint in contact with water becomes denatured and partially loses its ability to polymerize.
- Using materials that are less reactive than conventional ones, and subsequently accelerating the reaction at high temperatures with a blocked catalyst with an unblocking temperature higher than 90°C.
- Since the paint is in no way polymerized at temperatures of 80°C for hours or days, and since it has some water-soluble components, it can be cleaned with mild solvents, alcohols or mixtures of alcohol and water, even in 30/70 proportions.

The method for producing enamels for vehicle bodywork is carried out by means of electrostatic painting with a bell and is affected by the size of the paint drops and the amount of electric charge that can be produced on these drops, wherein the paint has a composition of melamine components together with the presence of a blocked acid catalyst.

Unless otherwise stated, all technical and scientific elements used in this specification have the meaning commonly understood by a person with ordinary skill in the art to which this invention belongs. In the practice of the present invention, similar or equivalent methods and materials to those described in the specification can be used.

Throughout the description and the claims, the word "comprises" and its variants do not intend to exclude other technical features, additives, components or steps. For those skilled in the art, other objects, advantages and features of the invention may be partially deduced from both the description and the embodiment of the invention.

### PREFERRED EMBODIMENT OF THE INVENTION

The process for applying the paint has the following features:
- Electrostatic painting with a bell. In the electrostatic painting process, the transmission of paint occurs through electrostatic attraction of the electrically charged paint particles by the bodywork, which is grounded and acts as a discharge pole.
   The electrostatic painting process is affected by the size of the paint drops and the amount of electric charge that can be produced on these drops. Both aspects will be better the lower the paint flow rate for the same electrical voltage.
   In one possible embodiment, the values of the parameters that affect electrostatic painting are in the range of ± 10%:
      - Paint flow rate 280CC
      - Guide air 200Nw.l/min
      - Voltage 60Kvolt
      - Paint conductivity 500+/-50kohms
   Another aspect that affects the deposition of the paint is the composition of the paint which has some water-soluble components, such as one of the melamines that, when coming into contact with water, is partially hydrophilic but not water-repellent, which makes it more easily retained.
   Melamines are very non-reactive, and they require the presence of an acid catalyst in order to react under the usual curing conditions for bodywork.
   A blocked acid catalyst has been selected as the acid catalyst, which has an unblocking temperature higher than 80°C, which is the temperature that bodywork can reach in the sun, especially those that are black or red.

In one possible and in no way limiting embodiment, the composition of the paint, in addition to the melamine and the catalyst, would be:
- 3 to 6% Pigment dispersant
- 25 to 40% Hydroxylated resin
- 2 to 5% Rheological additive
- 1 to 40% Titanium dioxide
- 1 to 20% Complementary pigment
- 5 to 15% Melamine resin
- 0.5 to 5% Surfactant
- 3 to 20% Flexibilizing polyol
- 1 to 3% Catalyst
- 5 to 25% Solvent

Having sufficiently described the nature of the present invention, as well as the manner in which it may be put into practice, it is noted that, within the essential nature thereof, the invention may be put into practice in other embodiments that differ in detail from that which is indicated by way of example, and for which the protection sought will also be achieved, as long as it does not alter, change or modify the fundamental principle of the invention.

## Claims

1. A method for producing enamels for vehicle bodywork, **characterized in that** it is carried out by means of electrostatic painting with a bell and is affected by the size of the paint drops and the amount of electric charge that can be produced on these drops, wherein the paint has a composition of melamine components together with the presence of a blocked acid catalyst.

2. The method for producing enamels for vehicle bodywork according to claim 1, **characterized in that** the values of the parameters used in electrostatic painting are in the range of ± 10%:
o Paint flow rate 280CC
o Guide air 200Nw.l/min
o Voltage 60Kvolt
o Paint conductivity 500+/-50kohms.

3. A paint composition used in the method for producing enamels according to any of the preceding claims, **characterized in that** the composition of the paint is:
- 3 to 6% Pigment dispersant
- 25 to 40% Hydroxylated resin
- 2 to 5% Rheological additive
- 1 to 40% Titanium dioxide
- 1 to 20% Complementary pigment
- 5 to 15% Melamine resin
- 0.5 to 5% Surfactant
- 3 to 20% Flexibilizing polyol
- 1 to 3% Catalyst
- 5 to 25% Solvent.
